# EUROPÄISCHE PATENTANMELDUNG

(11) **EP 1 070 749 A2**
(43) Veröffentlichungstag der Anmeldung: **24.01.2001**
(21) Anmeldenummer: 00115208.1
(22) Anmeldetag: 13.07.2000
(51) Int. Cl.: C09D 5/44

(54) **Verwendung von Pulverlacken und Pulverlackabfällen in anodisch abscheidbaren Elektrotauchlacken**

(30) Priorität: 23.07.1999 DE 19934703
(71) Anmelder: E.I. DU PONT DE NEMOURS AND COMPANY, Wilmington Delaware 19898 (US)
(72) Erfinder: Reis, Oliver, 58456 Witten (DE); Saatweber, Dietrich, 42369 Wuppertal (DE); Saatweber, Hans-Ulrich, 40627 Düsseldorf (DE); Vogt-Birnbrich, Bettina, 42719 Solingen (DE)
(74) Vertreter: Gille Hrabal Struck Neidlein Prop Roos

(57) **Zusammenfassung**

Verwendung von Pulverlacken und/oder Pulverlackabfällen als Zusatz zu anodisch abscheidbaren Elektrotauchlacken zur Verbesserung des Umgriffs bei der anodischen Elektrotauchlackierung.

## Beschreibung

Die Erfindung betrifft die Verwendung von Pulverlacken und/oder Pulverlackabfällen als Zusatzstoffe zu anodisch abscheidbaren Elektrotauchlacken, sowie die auf diese Weise bereitgestellten Elektrotauchlacke, Verfahren zu deren Herstellung und Verfahren zur anodischen Elektrotauchlackierung, die einen verbesserten Umgriff ergeben.

Die Beschichtung mit Pulverlacken gehört zu den besonders umweltfreundlichen Beschichtungsverfahren. Bei der Herstellung und Verarbeitung von Pulverlacken kann auf organische Lösemittel weitgehend verzichtet werden, auch treten bei ihrer Anwendung nur geringe Verluste auf.

Im allgemeinen werden die Pulverlacke hergestellt, indem die Einzelbestandteile wie beispielsweise Harz, Härter, Additive und gegebenenfalls Pigmente gemischt und in einem Schmelzvorgang homogenisiert werden. Die resultierende Schmelze wird gekühlt und auf eine für den anschließenden Mahlvorgang geeignete Größe zerkleinert. In geeigneten Mahlaggregaten wird anschließend auf die gewünschte Korngröße vermahlen.

Aus dem erzeugten Korngrößenspektrum werden in sogenannten Sichtern Feinstkornanteile abgetrennt, was für bestimmte Applikationen sowie aus sicherheitstechnischen und arbeitshygienischen Aspekten erforderlich ist (vgl. H.Kittel, Lehrbuch der Lacke und Beschichtungen Band VIII, Teil 2, Anhang Seiten 13 bis 24). Die Feinstkornanteile stellen zunächst einen Produktionsabfall dar.

Bei der Beschichtung mit Pulverlacken kann nicht verhindert werden, daß ein Teil des Beschichtungspulvers das Substrat nicht erreicht oder von diesem wieder abfällt. Im allgemeinen kann dieser Pulverlack-Overspray nicht wieder direkt in den Beschichtungsprozeß zurückgeführt werden, da die ursprüngliche Korngrößenverteilung verschoben ist und stellt zunächst ebenfalls einen Produktionsabfall dar.

Aus ökonomischen und ökologischen Gründen ist es wünschenswert, die anfallenden Produktionsabfälle einer Wiederverwertung zuzuführen. Es sind dazu eine Reihe von Verfahren vorgeschlagen worden, die alle eine mehr oder weniger aufwendige Aufarbeitung über erneutes Schmelzen und Vermahlen beinhalten.

Das Prinzip der Elektrotauchlackierung ist dem Fachmann geläufig und verbreitet in der Literatur beschrieben, beispielsweise in Metalloberfläche 31 (1977) 10, Seiten 455 - 459). Die Elektrotauchlackierung ist ein vollautomatisiertes, umweltfreundliches und wirtschaftliches Applikationsverfahren und findet praktische Anwendung in der Serienlackierung von elektrisch leitfähigen Oberflächen, insbesondere von Metalloberflächen. Es handelt sich dabei um ein vollautomatisiertes Applikationsverfahren mit hohem Auftragswirkungsgrad. Der Prozeß verläuft bevorzugt in geschlossenen Kreisläufen und ermöglicht die Rückführung von überschüssigem Lackmaterial sowie der eingesetzten Hilfs- und Betriebsstoffe.

Bei der anodischen Elektrotauchlackierung (ATL) wird ein Werkstück mit elektrisch leitender Oberfläche aus Metall oder aus elektrisch leitendem Kunststoff oder aus mit einem elektrisch leitenden Überzug versehenen Substrat in ein wäßriges ATL-Bad gebracht und als Anode an eine Gleichstromquelle angeschlossen. Bei Anlegen eines elektrischen Gleichstroms wandern die, durch zumindest teilweise Salzbildung wasserlöslich oder wasserdispergierbar gemachten Polymerteilchen der wäßrigen Dispersion des ATL-Bades zur Anode und reagieren dort mit den bei der gleichzeitig ablaufenden Wasserelektrolyse entstehenden Ionen wieder zum wasserunlöslichen Polymeren, welches aus der wäßrigen Phase koaguliert und sich mit den darin dispergierten Zusatzmitteln auf der Anode als Lackfilm abscheidet.

In der DE-A-23 64 642 wird die Herstellung von dicken filmartigen Überzügen durch anodische Tauchlackierung beschrieben. Um eine hohe Schichtdicke zu erreichen, werden dem Beschichtungsmittel wasserunlösliche Harzpulver mit Teilchengrößen von 10 bis 100 µm zugesetzt, wobei die häufigste Teilchengröße im Bereich von 25 bis 50 µm liegt. Der Anteil an wasserlöslichem Harz im Beschichtungsmittel ist begrenzt. Es hat sich gezeigt, daß mit diesen Beschichtungsmitteln erhaltene Beschichtungen nur einen sehr geringen Umgriff aufweisen und für die Beschichtung von Werkstücken mit mehrdimensionaler Geometrie oder mit Hohlräumen nicht geeignet sind.

In der DE-A-33 66 973 wird die galvanische Abscheidung von pulverförmigen Polymeren auf einer Anode beschrieben. Die polymeren Teilchen werden dazu mit einem amphoteren Metalloxid oder Hydroxid beschichtet, um sie unter dem Einfluß der Ladung zur Anode wandern zu lassen. Der eingebrannte Film ist etwas porös und hat einen verminderten Umgriff.

In der DE-A-2164 844 wird die elektrophoretische Abscheidung von pulverförmigen hochmolekularen Verbindungen an der Anode beschrieben. Dazu werden die Pulverteilchen mit einem nicht wassermischbaren organischen Lösemittel angefeuchtet und in Wasser, welches eine grenzflächenaktive Verbindung enthält suspendiert. Eine Harzträgerkomponente wird nicht eingesetzt.

Die vorliegende Erfindung hat sich die Aufgabe gestellt Pulverlacke, beispielsweise nicht verwertbare Pulverlacke aus Überproduktionen sowie Pulverlackabfälle, die bei der Herstellung und/oder Verarbeitung von Pulverlacken anfallen ohne aufwendige Konditionierung in wirtschaftlicher und umweltfreundlicher Weise einer Wiederverwertung zuzuführen.

Es hat sich gezeigt, daß diese Aufgabe gelöst werden kann durch die einen Gegenstand der Erfindung bildende Verwendung von Pulverlacken und/oder Pulverlackabfällen als Zusatzstoffe zu anodisch abscheidbaren Elektrotauchlacken.

Überraschenderweise ist dies möglich, ohne daß dabei der Umgriff einer aus einem unter dieser Verwendung hergestellten Elektrotauchlack erhaltenen Elektrotauchlackbeschichtung verschlechtert wird, sondern vielmehr sogar verbessert wird.

Die erfindungsgemäß verwendbaren Pulverlacke, Pulverlackabfälle oder Mischungen daraus weisen eine Teilchengrößenverteilung von 0,5 bis 100 µm auf, wobei bevorzugt 40 bis 60 Gew.-% der Pulverlacke und/oder Pulverlackabfläche eine Teilchengröße unter 10 µm und bis zu 20 Gew.-% eine Teilchengröße unter 5 µm aufweisen. Besonders bevorzugt ist die Häufigkeit im Beriecht von 0,5 bis 10 µm am größten. Es hat sich gezeigt, daß der Einsatz derartiger Feinpulver in anodisch abscheidbaren Elektrotauchlacken den Umgriff von daraus erstellten anodisch abgeschiedenen Schichten besonders günstig verbessert. Beispielsweise können Pigmente und/oder Füllstoffe und/oder Bindemittel auch zumindest teilweise bei der Bereitung von anodisch abscheidbaren Elektrotauchlacken durch derartige Feinpulver ersetzt werden.

Dementsprechend betrifft die vorliegende Erfindung auch anodisch abscheidbare Tauchlacke, die ein oder mehrere Bindemittel, Wasser, sowie gegebenenfalls ein oder mehrere Vernetzungsmittel, Pigmente, Füllstoffe und/oder übliche Additive enthalten und dadurch gekennzeichnet sind, daß sie einen oder mehrere Pulverlacke und/oder einen oder mehrere Pulverlackabfülle mit einer Teilchengrößenverteilung von 0,5 bis 100 µm, wobei 40 bis 60 Gew.-% der Pulverlacke und/oder Pulverlackabfälle eine Teilchengröße unter 10 µm und bis zu 20 Gew.-% eine Teilchengröße unter 5 µm aufweisen, enthalten.

Die Pulverlacke und/oder Pulverlackabfälle werden erfindungsgemäß bevorzugt so eingesetzt, daß der erhaltene anodisch abscheidbare Elektrotauchlack 50 bis unter 200 Gewichtsteile Pulverlack und/oder Pulverlackabfälle bezogen auf 100 Gewichtsteile Bindemittel plus gegebenenfalls vorhandenem Vernetzungsmittel, enthält.

Gemäß einer bevorzugten Ausführungsform betrifft die Erfindung einen anodisch abscheidbaren Elektrotauchlack, enthaltend
A) 67 bis 33 Gew.-% einer wasserverdünnbaren Komponente aus einem oder mehreren Bindemitteln und gegebenenfalls einem oder mehreren Vernetzungsmitteln und gegebenenfalls einem oder mehreren Pigmenten und/oder Füllstoffen,
B) 33 bis 67 Gew.-% eines oder mehrerer Pulverlacke und/oder Pulverlackabfälle mit einer Teilchengrößenverteilung von 0,5 bis 100 µm, wobei 40 bis 60 Gew.-% eine Teilchengröße unter 10 µm und bis zu 20 Gew.-% eine Teilchengröße unter 5 µm aufweisen,
sowie Wasser und gegebenenfalls ein oder mehrere übliche Additive, wobei das Gewichtsverhältnis von Bindemittel zu Vernetzungsmittel in der Komponente A) 100 : 0 bis 65 : 35 und das Pigment/Bindemittel-Gewichtsverhältnis in der Komponente A) 0,1 : 1 bis 1,5 : 1 beträgt.

Der anodisch abscheidbare Elektrotauchlack wird durch Vermischen einer oder mehrerer geeigneter Bindemitteklispersion(en) mit gegebenenfalls einem oder mehreren Vernetzer(n) sowie gegebenenfalls üblichen Additiven, Lackzusatzmitteln wie beispielsweise Katalysatoren, Lichtschutzmittel, optische Aufheller, biozide Komponenten, Neutralharze, Schichtbildner, Emulgatoren und gegebenenfalls Pigmenten und/oder Füllstoffen hergestellt. Die Pulverlack- und/oder Pulverlackabfall-Anteile können zu jedem Zeitpunkt zugemischt werden.

Geeignete Bindemittel für die wäßrigen Bindemitteldispersionen der erfindungsgemäß bereitgestellten anodisch abscheidbaren Elektrotauchlacke sind sämtliche üblichen Bindemittelsysteme für anodisch abscheidbare Elektrotauchlacke (ATL). Sie enthalten anionische bzw. saure Gruppen, die durch Neutralisation in anionische Gruppen überführt werden können. Saure Gruppen können beispielsweise Carboxylgruppen, Sulfonsäuregruppen, Phosphonsäuregruppen, bevorzugt Carboxylgruppen sein. Die Säurezahl der Bindemittel liegt bevorzugt bei 20 bis 150, besonders bevorzugt bei 20 bis 120.

Besonders bevorzugt werden Bindemittelsysteme eingesetzt, die weitere funktionelle Gruppen, insbesondere Hydroxylgruppen enthalten. Vorzugsweise liegt dabei die Hydroxylzahl bei 20 bis 150, besonders bevorzugt bei 20 bis 120.

Beispiele für die Bindemittelsysteme sind solche, wie sie für wäßrige Beschichtungssysteme allgemein, speziell für anodische Elektrotauchlackbeschichtungen bekannt sind. Dazu gehören beispielsweise Polyester-, Polyacrylat- und Polyurethanharze, wie z.B. Alkydharze, urethanisierte Polyesterharze oder acrylierte Polyester- oder Polyurethanharze, nialeinisierte Öle, Epoxiester, maleinisiertes Polybutadienöl sowie Mischungen dieser Harze. Bevorzugt sind es Polyesterharze.

Geeignete Polyesterharze sind beispielsweise carboxylgruppen- und hydroxylgruppenhaltige Polyester mit einer Säurezahl von 20 bis 150 und einer Hydroxylzahl von 20 bis 150. Sie können beispielsweise nach den dem Fachmann bekannten Verfahren, durch Umsetzung von mehrwertigen Alkoholen und mehrwertigen Carbonsäuren oder Carbonsäureanhydriden, sowie gegebenfalls aliphatischen und/oder aromatischen Monocarbonsäuren hergestellt werden. Der Hydroxylgruppengehalt wird in an sich bekannter Weise durch geeignete Wahl der Art und Mengenverhältnisse der Ausgangskomponenten eingestellt. Die Carboxylgruppen können beispielsweise durch Halbesterbildung aus einem vorgefertigten, Hydroxylgruppen aufweisenden Polyesterharz mit Säureanhydriden eingeführt werden. Der Einbau von Carboxylgruppen kann beispielsweise auch durch Mitverwendung von Hydroxycarbonsäuren bei der Polykondensationsreaktion erfolgen.

Die Polycarbonsäuren, beispielsweise Dicarbonsäuren und die Polyole können aliphatisch, cycloaliphatisch oder aromatisch sein.

Die zur Herstellung der Polyester verwendeten Polyole sind beispielsweise Diole wie Alkylenglykole, wie beispielsweise Ethylenglykol, Butylenglykol, Hexandiol, hydriertes Bisphenol A, 2,2-Butyl-ethyl-propandiol, Neopentylglykol und/oder andere Glykole wie beispielsweise Dimethylolcyclohexan. Es können auch höherfunktionelle oder Gemische aus höher- und monofunktionellen OH-Komponenten wie beispielsweise Trimethylolpropan, Pentaerythrit, Glycerin, Hexantriol; Polyether, die Kondensate von Glykolen mit Alkylenoxiden sind; Monoether solcher Glykole, wie Diethylenglykolmonoethylether, Tripropylenglykolmonmethylether, eingesetzt werden.

Die Säurekomponente des Polyesters besteht bevorzugt aus niedermolekularen Dicarbonsäuren oder ihren Anhydriden mit 2 bis 18 Kohlenstoffatomen.

Geeignete Säuren sind beispielsweise Phthalsäure, Isophthalsäure, Terephthalsäure, Hexahydrophthalsäure, Adipinsäure, Azelainsäure, Sebazinsäure, Fumarsäure, Maleinsäure, Glutarsäure, Bernsteinsäure, Itaconsäure und/oder 1,4-Cyclohexandicarbonsäure. Anstelle dieser Säuren können auch ihre Methylester oder Anhydride, soweit diese existieren, verwendet werden. Es ist auch möglich, um verzweigte Polyester zu erhalten, Anteile an höherfunktionellen Carbonsäuren zuzusetzen, wie beispielsweise trifunktionelle Carbonsäuren, Trimellithsäure, Apfelsäure, Aconitsäure, Bishydroxyethyltaurin sowie Dimethylolpropionsäure, Dimethylolbuttersäure oder Bisanhydride. Polycarbosäuren, die keine cyclischen Anhydride bilden sind bevorzugt.

Die Polyesterharze können beispielsweise auch durch den Einbau von ungesättigten Verbindungen, Isocyanatgruppen enthaltenden Verbindungen oder durch Schoß- oder Pfropfpolymerisation mit ethylenisch ungesättigten Verbindungen modifiziert werden. Bevorzugte Polyester sind beispielsweise carboxylgruppenhaltige Polyester mit einer Säurezahl von 20 bis 120 und einer Hydroxylzahl von 20 bis 150, bevorzugt 60 bis 120. Sie sind beispielsweise Umsetzungsprodukte aus zwei- und/oder mehrwertigen aliphatischen oder cycloaliphatischen gesättigten Alkoholen, aliphatischen, cycloaliphatischen und/oder monocyclischen aromatischen zwei- oder mehrbasischen Polycarbonsäuren und gegebenenfalls linearen oder verzweigten, gesättigten oder ungesättigten aliphatischen und/oder cycloaliphatischen C3- bis C20-Monoalkoholen oder Monocarbonsäuren. Die Mengenverhältnisse der Ausgangskomponenten errechnen sich aus den Molverhältnissen, die zu den gewünschten Säurezahlen und Hydroxylzahlen des Harzes führen. Die Auswahl der einzelnen Ausgangskomponenten ist dem Fachmann unter Berücksichtigung der Zielsetzung bekannt.

Das zahlenmittlere Molgewicht Mn der geeigneten Polyester, gemessen gegen Polystyrol als Eichsubstanz, liegt beispielsweise bei 1000 bis 6000, vorzugsweise bei 2000 bis 4000.

Besonders bevorzugt sind carboxylgruppenhaltige ölfreie Polyester, wie sie z.B. in der DE-A-32 47 756 beschrieben sind. Diese Polyester enthalten vorzugsweise 0,3 bis 3,0, besonders bevorzugt 0,5 bis 2,5 Milläquivalente aliphatische, cycloaliphatische und/oder aromatische Dicarbonsäuren pro Gramm Harz einkondensiert. Von drei- oder mehrbasischen cyclischen Carbonsäuren sind zweckmäßig 0,8 bis 2,0, vorzugsweise 0,9 bis 1,8, besonders bevorzugt 1,1 bis 1,5 Millimol pro Gramm Harz über nur eine Carboxylgruppe an den Polyester gebunden. Als Polycarbonsäuren werden drei- und/oder mehrbasische Polycarbonsäuren eingesetzt, vorzugsweise drei und/oder vierbasische Säuren. Die Herstellung dieser Polyester kann in an sich bekannter Weise durch Polykondensation der Ausgangsstoffe erfolgen, wobei zur Vermeidung von Trübungen und Gelbildungen bevorzugt stufenweise gearbeitet wird.

Die Veresterung von bevorzugt aromatischen und cycloaliphatischen Dicarbonsäuren die kein intramolekulares Anhydrid bilden können, erfolgt bevorzugt mit Dialkoholen, die entweder sekundäre OH-Gruppen oder durch Substituenten sterisch gehinderte primäre OH-Gruppen enthalten, wobei durch Alkoholüberschuß ein OH-gruppenhaltiger Polyester entsteht. Die Alkohole enthalten vorzugsweise 2 bis 21, besonders bevorzugt 4 bis 8 C-Atome. Die Dicarbonsäuren enthalten vorzugsweise 5 bis 10 C-Atome, besonders bevorzugt 6 C-Atome.

Beispiele hierfür sind Isophthalsäure, Terephthalsäure, 1,3- und 1,4-Cyclohexandicarbonsäure oder alkylsubstituierte Dicarbonsäuren wie Butylisophtalsäure. Besonders bevorzugt wird Isophthalsäure.

Andererseits können auch Dimethylester wie Terephthalsäuredimethylester oder 1,4-Cyclohexandicarbonsäuredimethylester durch Umesterung, gegebenenfalls in Gegenwart von Umesterungskatalysatoren, in den Polyester eingeführt werden.

Zum Erzielen von Verzweigungen kann anstelle eines Teils der Dicarbonsäuren eine entsprechende Menge Tricarbonsäure wie Trimellithsäureanhydrid in das Harzmolekül einkondensiert werden.

Als Dialkohole werden bevorzugt Neopentylglykol, Hydroxypivalinsäureneopentylglykolester, Hexandiol-2,5, 1,4-Bis(hydroxymethyl)cyclohexan, 1,1-Isopyrilidin-bis-(p-phenoxy)-2-propanol, 2,2,4-Trimethylolpentandiol-1,3 eingesetzt, sowie Gemische davon.

Als Dialkohol kann beispielsweise auch der Glycidester von verzweigten Fettsäuren, wie Versaticsäure, verwendet werden, weil die Fettsäure hydrolysestabil in den Molekülverband eingebaut ist. In Spezialfällen ist auch der Einsatz von Epoxidharzen möglich, deren Epoxigruppen mit Monoalkoholen umgesetzt worden sind.

Ein anteilweiser Einsatz von Polyolen mit mehr als zwei OH-Gruppen wie Trimethylolpropan oder Pentaerythrit ist zum Einstellen geeigneter Hydroxylzahlen und Viskositäten möglich. Das gleiche gilt auch zur Elastifizierung durch eine geringfügige Modifizierung mit langkettigen Dialkoholen wie Hexandiol-1,6 oder von aliphatischen Dicarbonsäuren wie Adipinsäure.

Die Veresterung (erste Stufe) wird in bekannter Weise azeotrop oder in der Schmelze bei erhöhter Temperatur (über 190°C) vorgenommen und liefert ein klares Produkt mit einer Säurezahl von 0 bis 50, bevorzugt von 5 bis 25 und einer Viskosität von 200 bis 3000 mPas, gemessen bei 25°C in einer 75%igen Butylglykollösung.

Um die Löslichkeit im wäßrigen alkalischen Medium zu ermöglichen, müssen in die OH-gruppenhaltigen Polyester zusätzlich Carboxylgruppen eingeführt werden. Dazu erfolgt eine Umsetzung bei Temperaturen unter 190°C (zweite Stufe) mit einer aromatischen oder cycloaliphatischen Dicarbonsäure, die bevorzugt durch Defunktionalisierung mit einem langkettigen, aliphatischen hydrophoben Monoalkohol aus einer Polycarbonsäure mit drei oder vier Carboxylgruppen wie beispielsweise Trimesinsäure, Hemellithsäure, Prehnitsäure und Mellophansäure entstanden ist.

Besonders einfach gestaltet sich das Verfahren bei Einsatz von anhydridhaltigen Verbindungen wie Trimellithsäureanhydrid, Pyromellithsäureanhydrid oder entsprechenden hydrierten Ringsystemen, sowie Cyclopentantetracarbonsäueanhydrid oder Pyrazintetracarbonsäureanhydrid.

Als Monoalkohole können beispielsweise eingesetzt werden geradkettige und/oder verzweigte gesättigte und/oder ungesättigte primäre, sekundäre und/oder tertiäre, bevorzugt primäre und/oder sekundäre Alkohole. Es können auch Gemische insbesondere isomere Gemische dieser Alkohole eingesetzt werden. Bevorzugt sind aliphatische C6- bis C18-Monoalkohole sowie Benzylalkohol und seine Alkylsubstitutionsprodukte. Besonders bevorzugt werden verzweigtkettige C8- bis C13-iso-Monoalkohole. Besonders hydrolysestabile Halbester werden durch Verwendung von verzweigten Monoalkoholen oder sekundären Monoalkoholen wie Cyclohexanol oder sekundärem Methyloctylalkohol erhalten. Durch den Aufbau des Harzes wird gewährleistet, daß gegebenenfalls durch Hydrolyse entstehende Spaltprodukte (Monoalkohol und Trimellithsäure-Monoester) ohne Störungen elektrophoretisch mit dem Film abgeschieden werden.

Die Polycarbonsäuren können beispielsweise in einem Zweitopfverfahren stöchiometrisch mit soviel Monoalkohol umgesetzt werden, daß eine Dicarbonsäure erhalten bleibt, die anschließend zu dem OH-gruppenhaltigen Polyester bei Temperaturen von etwa 150 bis 190°C zugegeben wird.

In der Praxis hat sich die Herstellung des carboxylgruppenhaltigen Polyesters im Eintopfverfahren bewährt, indem zu dem OH-gruppenhaltigen Polyester die etwa stöchiometrischen Mengen von Monoalkohol und Trimellithsäureanhydrid in der angegebenen Reihenfolge zugegeben werden.

Der Einbau von Carboxylgruppen kann auch beispielsweise durch Mitverwendung von Hydroxycarbonsäuren wie z.B. Dimethylolpropionsäure bei der Polykondensationsreaktion erfolgen, deren freien Carboxylgruppe im allgemeinen wegen der sterischen Hinderung nicht an der Polykondensationsreaktion teilnimmt, so daß der Einbau dieser Säure ausschließlich über die Hydroxylgruppen stattfindet.

Die Molverhältnisse der Gesamtrezeptur zur Herstellung des Polyesters werden so gewählt, daß eine für den jeweiligen Anwendungszweck geeignete Viskosität erreicht wird. Sie beträgt beispielsweise etwa 200 bis 3000, bevorzugt 250 bis 2000 und besonders bevorzugt 300 bis 1500 mPa.s, gemessen 50 %ig in Butylglykol bei 25°C. Sie kann ebenso wie das Molekulargewicht durch Mischen von Harzen mit niedrigerer und höherer Viskosität bzw. niedrigerem und höherem Molekulargewicht eingestellt werden. Die obere Grenze der Säurezahl liegt bevorzugt unter 100, besonders bevorzugt unter 60; die untere Grenze der Säurezahl liegt bevorzugt über 35, besonders bevorzugt über 40. Der carboxylgruppenhaltige Polyester enthält mindestens eine, bevorzugt mindestens zwei Carboxylgruppen pro Molekül, um die Wasserverdünnbarkeit durch Salzbildung mit einer niedrigmolekularen Base zu erzielen. Ist die Säurezahl zu gering, so ist die Löslichkeit unzureichend; ist sie zu hoch, so bewirkt die hohe Neutralisation eine verstärkte Elektrolyse im ATL-Bad, die zu Oberflächenstörungen führen kann. Der gewählte Alkoholüberschuß ergibt im fertigen Harz eine Hydroxylzahl von etwa 20 bis 150, bevorzugt von 60 bis 120. Es werden Harze bevorzugt, die bei niedriger Säurezahl eine relativ hohe Hydroxylzahl aufweisen.

Die Polykondensation erfolgt beispielsweise azeotrop oder in der Schmelze, beispielsweise bei Reaktionstemperaturen zwischen 160 und 240°C, bevorzugt zwischen 160 und 210°C. Nach Erreichen der gewünschten Endwerte bezuglich Viskosität und Säurezahl wird auf eine Temperatur abgekühlt bei der das Produkt eine Viskosität hat, die eine Einarbeitung von Wasser erlaubt. In der Praxis bedeutet das, daß die Schmelzviskosität nicht über 40000 mPa.s liegen soll. Sofern nicht unter Druck gearbeitet wird, sind das Temperaturen bis zu etwa 100°C. Zur Überführung in eine wäßrige Lösung oder Dispersion werden die Carboxylgruppen des Polykondensationsproduktes zumindest teilweise durch Zugabe von Neutralisationsmittel neutralisiert. Das Neutralisationsmittel kann vor oder während der Wasserzugabe zugefügt werden, es kann aber auch in dem Wasser vorgelegt werden, in dem das Polykondensationsprodukt dispergiert wird. Dabei werden beispielweise schnellaufende Rührscheibengeräte, Rotor-/Stator-Mischer oder Hochdruckhomogenisatoren verwendet. Bei oder nach der Überführung in die wäßrige Lösung oder Dispersion können gegebenenfalls organische Lösemittel destillativ entfernt werden.

Als Neutralisationsmittel eignen sich übliche Basen wie beispielsweise Ammoniak, NaOH, KOH, LiOH, primäre, sekundäre und tertiäre Amine wie Diethylamin, Triethylamin, Morpholin; Alkanolainine wie Diisopropanolamin, Dimethylaminoethanol, Triisopropanolamin, Dimethylamino-2-methylpropanol; quartenäre Ammoniumhydroxide oder gegebenenfalls auch geringe Mengen an Alkylenpolyaminen wie Ethylendiainin. Es können auch Mischungen derartiger Neutralisationsmittel verwendet werden.

Die Menge an Neutralisationsmittel wird so gewählt, daß sich ein MEQ-Wert von 15 bis 90, bevorzugt von 20 bis 60 einstellt.

Geeignete Polyacrylatharze sind beispielsweise carboxylgruppenhaltige und/oder sulfongruppenhaltige Copolymerisate die auch Hydroxylgruppen enthalten können mit einer Säurezahl von 20 bis 150 und einem zahlenmittleren Molekulargewicht Mn von 1000 bis 10000 und falls Hydroxylgruppen vorhanden sind mit einer Hydroxylzahl von 20 bis 200.

Ihre Herstellung erfolgt nach üblichen Verfahren durch Copolymerisation von olefinisch ungesättigten Monomeren, wobei Säuregruppen aufweisende Monomere mit weiteren Monomeren copolymensiert werden. Die Mitverwendung der Säuregruppen aufweisenden Monomeren erfolgt zwecks Einbau von Carboxyl- und/oder Sulfonsäuregruppen in die Copolymerisate um nach zumindestens teilweiser Neutralisation dieser Gruppen die Wassserlöslichkeit oder Wasserdispergierbarkeit der Copolymeren zu gewährleisten.

Geeignete Säuregruppen aufweisende Monomere sind im Prinzip alle olefinisch ungesättigten polymerisierbaren Verbindungen, die mindestens eine Carboxyl- und oder Sulfonsäuregruppe aufweisen, wie beispielsweise olefinisch ungesättigte Mono- oder Dicarbonsäuren wie (Meth)acrylsäure, Crotonsäure, Fumarsäure, Maleinsäure, Itaconsäure oder die Halbester von Fumarsäure, Maleinsäure und Itaconsäure oder Sulfonsäuregruppen aufweisende olefinisch ungesättigte Verbindungen wie beispielsweise 2-Acrylamido-2-methylpropansulfonsäure oder beliebige Gemische derartiger olefinisch ungesättigter Säuren. Besonders bevorzugt sind Acrylsäure und Methacrylsäure.

Zur Erzielung von gewünschten anwendungstechnischen Eigenschaften im fertigen Lack können die Copolymerisate neben den Säuregruppen aufweisenden Monomeren weitere, funktionelle Gruppen aufweisende Monomere enthalten, mit denen sich z.B. Vernetzungsreaktionen durchführen lassen. Dabei kann sowohl Selbstvernetzung der Copolymerisate als auch Fremdvernetzung mit anderen, zusätzlich in den Lack eingebrachten Komponenten erfolgen. Desweiteren können bei der Herstellung der Copolymerisate im Prinzip alle nichtfunktionellen olefinisch ungesättigten Monomeren mitverwendet werden.

Beispiele für derartige funktionelle Gruppen sind Hydroxy.-, Amino-, Amido-, Keto-, Aldehyd-, Lactam-, Lacton-, Isocyanat-, Epoxy- und Silangruppen. Olefinisch ungesättigte Monomere die derartige funktionelle Gruppen tragen sind bekannt. Bevorzugt sind Hydroxy- und Epoxygruppen.

Geeignete nicht-funktionelle Monomere sind beispielsweise Ester der Acryl- und Methacrylsäure, deren Alkoholkomponenten 1 bis 18 C-Atome enthalten, Vinylaromaten, Vinylester von aliphatischen Monocarbonsäuren, Acryl- und Methacrylnitril.

Die Herstellung der Copolymerisate kann durch Polymerisation nach üblichen Verfahren durchgeführt werden. Vorzugsweise erfolgt die Herstellung der Copolymerisate in organischen Lösemitteln. Möglich sind dabei kontinuierliche oder diskontinuierliche Polymerisationsverfahren.

Als Lösemittel kommen Aromaten, Ester, Ether und Ketone in Betracht. Bevorzugt werden Glykolether eingesetzt.

Die Copolymerisation erfolgt beispielsweise bei Temperaturen zwischen 80 und 180°C unter Verwendung von üblichen Initiatoren wie beispielsweise aliphatischen Azoverbindungen oder Peroxiden. Zur Regulierung des Molekulargewichts der Copolymeren können übliche Regler eingesetzt werden. Nach beendeter Polymerisation können die Copolymerisate, wie bei den Polykondensationsharzen beschrieben, neutralisiert und in eine wäßrige Lösung oder Dispersion überführt werden, wobei gegebenenfalls das organische Lösemittel abdestilliert werden kann. Beispiele für basische Neutralisationsmittel sind die vorstehend zur Neutralisation der Polyesterharze beschriebenen.

Geeignete Polyurethanharze sind beispielsweise anionische Polyurethanharze, die in Salzform vorliegende Carboxyl-, Sulfonsäure und/oder Phosphonsäuregruppen enthalten. Sie werden in an sich bekannter Weise aus Polyolen, Polyisocyanaten und gegebenenfalls Kettenverlängerungsmitteln hergestellt.

Die Polyurethanharze können sowohl in Substanz als auch in organischen Lösemiteln, die nicht mit Isocyanaten reagieren können, hergestellt werden. Sie werden, wie bei den Polykondensationsharzen beschrieben, nach Neutralisation der Säuregruppen in die wäßrige Phase überführt. In vielen Fällen ist es zweckmäßig, die Polyurethanharze stufenweise herzustellen.

So ist es z.B. möglich, zunächst ein Prepolymeres mit Säuregruppen und endständigen Isocyanatgruppen in organischen Lösemitteln herzustellen, welches, nach Neutralisation der Säuregruppen mit tertiären Aminen, kettenverlängert und in die wäßrige Phase überführt wird, wobei die organischen Lösemittel destillativ entfernt werden können.

Die zur Herstellung des Prepolymeren eingesetzten Polyole können nieder und/oder hochmolekular sein und auch anionische Gruppen aufweisen.

Niedermolekulare Polyole haben bevorzugt eine zahlenmittlere Molmasse Mn von 60 bis 400 und können aliphatische, alicyclische oder aromatische Gruppen enthalten. Sie können bis zu 30 Gew.-% der gesamten Polyolbestandteile eingesetzt werden.

Geeignete niedermolekulare Polyole sind beispielsweise Diole, Triole und Polyole wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Pentaerythrit, 1,2-Cyclohexandiol, 1,4-Cyclohexandimethanol, Bisphenol A, Bisphenol F, hydriertes Bisphenol A sowie Mischungen aus diesen Polyolen.

Hochmolekulare Polyole bestehen aus linearen oder verzweigten Polyolen mit einer OH-Zahl von 30 bis 150. Bevorzugt handelt es sich dabei um gesättigte oder ungesättigte Polyesterdiole und/oder Polyetherdiole und/oder Polycarbonatdiole mit einer Molmasse Mn von 400 bis 5000 oder deren Mischungen.

Geeignete lineare oder verzweigte Polyetherdiole sind beispielsweise Poly(oxyethylen)glykole, Poly(oxypropylen)glykole und/oder Poly(oxybutylen)glykole.

Polyesterdiole sind bevorzugt und werden in bekannter Weise durch Veresterung von Dicarbonsäuren oder ihren Anhydriden mit Diolen hergestellt. Um verzweigte Polyester herzustellen, können in geringem Umfang auch Polyole oder Polycarbonsäuren mit einer höheren Funktionalität eingesetzt werden.

Die zur Anionenbildung befähigten Gruppen können aus dem Polyester stammen oder sie werden in das Prepolymere durch Mitverwendung von Verbindungen eingebracht, die zwei mit Isocyanatgruppen reagierende H-aktive Gruppen und mindestens eine zur Anionenbildung befähigte Gruppe aufweisen. Geeignete, mit Isocyanatgruppen reagierende Gruppen sind insbesondere Hydroxylgruppen sowie primäre und/oder sekundäre Aminogruppen. Gruppen, die zur Anionenbildung befähigt sind, sind beispielsweise Carboxyl-, Sulfonsäure- und/oder Phosphonsäuregruppen. Beispiele für solche Verbindungen sind Dihydroxycarbonsäuren, wie Dihydroxypropionsäure, Dihydroxybuttersäure, Dihydroxybernsteinsäure, Diaminobernsteinsäure und bevorzugt α,α-Dimethylolalkansäuren wie z.B. Dimethylolpropionsäure.

Als Polyisocyanate eignen sich aliphatische, cycloaliphatische und/oder aromatische Polyisocyanate mit mindestens zwei Isocyanatgruppen pro Molekül und die an sich bekannten Biuret-, Allophant-, Urethan- und/oder Isocyanuratgruppen aufweisenden Derivate dieser Diisocyanate sowie Mischungen dieser Polyisocyanate. Bevorzugt werden die Isomeren oder Isomerengemische von organischen Diisocyanaten eingesetzt.

Die zur Herstellung des Prepolymeren eingesetzte Polyisocyanatkomponente kann auch geringe Anteile an höherfuktionellen Polyisocyanaten enthalten.

Die Herstellung des Prepolymeren wird zweckmäßigerweise in Gegenwart von Katalysatoren wie z.B. Organozinnverbindungen oder tertiären Aminen durchgeführt.

Die Überführung des Polyurethanharzes in die wäßrige Phase erfolgt, wie bei den Polyesterharzen beschrieben, nach Neutralisation der Säuregruppen des Polyurethanharzes mit einem basischen Neutralisationsmittel, gegebenenfalls unter destillativer Entfernung von organischen Lösemitteln.

Beispiele für basische Neutralisationsmittel sind die vorstehend zur Neutralisation der Polyesterharze beschriebenen.

Die Vernetzung der erfindungsgemäßen Bindemitteldispersion(en) erfolgt vorzugsweise beim Einbrennen durch Reaktion mit einer vernetzenden Komponente. Vernetzende Komponenten sind dem Fachmann geläufig. Beispiele sind Aminoplastharze, insbesondere Melamin-Formaldehydharze; Phenoplastharze; blockierte Polyisocyanate oder Umesterungsvernetzer wie Polyester oder Polyurethanester mit Hydroxyalkylestergruppen, Acetessigsäure- oder Malonsäure-Alkylesterderivate, Tris(allcoxycarbonylamino)triazinderivate und Mischungen aus diesen Komponenten, die mit oder ohne Einwirkung von Katalysatoren hochvernetzte Beschichtungen ergeben können. Blockierte Polyisocyanate werden bevorzugt.

Die blockieten Polyisocyanate enthalten im Mittel mehr als eine Isocyanatgruppe, bevorzugt mindestens zwei Isocyanatgruppen pro Molekül. Sie sollen in der wäßrigen Phase bei etwa neutralem bis schwach basischem pH-Wert lagerstabil sein, bei Wärmeeinwirkung von etwa 100 bis 200°C aufspalten und mit den im Harzverband vorhandenen reaktiven Hydroxyl- und/oder Carboxylgruppen vernetzen.

Blockierte Polyisocynate werden durch Umsetzung von Polyisocyanaten mit monofunktionellen Verbindungen mit aktivem Wasserstoff erhalten.

Als Polyisocyanate, die einzeln oder im Gemisch in blockierter Form als Vernetzungsmittel eingesetzt werden können, eignen sich beliebige organische Di- und/oder Polyisocyanate mit aliphatisch, cycloaliphatisch, araliphatisch und/oder aromatisch gebundenen, freien Isocyanatgruppen.

Bevorzugt werden Polyisocyanate, die etwa 3 bis 36, besonders bevorzugt 8 bis 15 Kohlenstoffatome enthalten. Beispiele für geeignete Diisocyanate sind Toluylendiisocyanat, Diphenylmethandiisocyanat und insbesondere Hexamethylendiisocyanat, Tetramethylxylylendiisocyanat, Isophorondiisocyanat, Dicyclohexylmethandiisocyanat und Cyclohexandiisocyanat.

Sehr gut geeignet sind beispielsweise "Lackpolyisocyanate" auf Basis von Hexamethylendiisocyanat, Isophorondiisocyanat und/oder Dicyclohexylmethandiisocyanat, wobei es sich dabei um sie an sich bekannten Biuret-, Urethan-, Uretdion- und/oder Isocyanuratgruppen aufweisenden Derivate dieser Diisocyanate handelt.

Monofunktionelle Verbindungen mit aktivem Wasserstoff, die zur Blockierung der Polyisocyanate eingesetzt werden können sind dem Fachmann bekannt. Beispielsweise können CH-acide Verbindungen wie Acetylaceton,; CH-acide Ester wie Acetessigsäurealkylester, Malonsäuredialkylester; (cyclo)aliphatische Alkohole wie n-Butanol, 2-Ethylhexanol, Cyclohexanol; Glykolether wie Butylglykol, Butyldiglykol; Phenole wie Kresol, tert.-Butylphenol; Diaminoalkohole wie Dimethylaminoethanol; Oxime wie Butanonoxim, Acetonoxim, Cylcohexanonoxim; Lactame wie ε-Caprolactam oder Pyrrolidon-2; Imide; Hydroxyalkylester; Hydroxamsäure und deren Ester; Pyrazole verwendet werden.

Die Polyisocyanate können innerhalb eines Moleküls mit gleichen oder verschiedenen Blockierungsmitteln blockiert sein. Es können auch Gemische von gleich oder unterschiedlich blockierten Polyisocyanaten verwendet werden.

Die Melamin-Formaldebydharze vernetzen mit den Hydroxylgruppen des Polyesterharzes unter Bildung von Ethergruppen. Beispielsweise handelt es sich bei diesen Vernetzern um nach bekannten technischen Verfahren in Gegenwart von Alkoholen wie Methanol, Ethanol, Propanol, Butanol oder Hexanol mit Aldehyden, insbesondere Formaldehyd, kondensierte Triazine wie Melamin oder Benzoguanamin. Bevorzugt handelt es sich dabei um Methanol-veretherte Melaminharze wie z.B. Cymel 325®, Cymel 327®, Cymel 350® , Cymel 370®, Maprenal MF 927®; Butanol- oder Isobutanol-veretherte Melaminharze wie z.B. Setamin US 138® oder Maprenal MF 610®; mischveretherte Melaminharze, sowie insbesondere um Hexamethylolmelaminharze wie z.B. Cymel 301® oder Cymel 303®.

Zur Pigmentierung des anodischen Elektrotauchlacks können übliche Pigmente, Füllstoffe, Koffosionsinhibitoren und Lackhilfsmittel verwendet werden, solange sie mit Wasser im schwach basischen bis neutralen pH-Bereich keine störenden Reaktionen eingehen und keine wasserlöslichen störenden Fremdionen einschleppen.

Bei den Pigmenten und Füllstoffen handelt es sich dabei um die üblichen in der Lackindustrie einsetzbaren Füllstoffe und anorganischen oder organischen farb- und/oder effektgebenden Pigmente und Korrosionsschutzpigmente. Beispiele für anorganische farbgebende Pigmente sind Titandioxid, mikronisiertes Titandioxid, Zinksulfid, Lithopone, Bleicarbonat, Bleisulfat, Zinnoxid, Antimonoxid, Eisenoxide, Chromgelb, Nickeltitangelb, Chromorange, Molybdatrot, Mineralviolett, Ultramarinviolett, Ultramarinblau, Kobaltblau, Chromoxidgrün und Ruß. Beispiele für farbgebende organische Pigmente sind solche aus den Gruppen von Azo-, Phthalocyanin-, Chinacridon-, Perylen-, Perinon-, Anthrachinon-, Thioindigo- und Diketopyrrolopyrrolpigmenten. Beispiele für effektgebende Pigmente sind Metallpigmente, beispielsweise aus Aluminium, Kupfer oder anderen Metallen; Interferenzpigmente wie beispielsweise metalloxidbeschichtete Metallpigmente oder metalloxidbeschichtete Glimmer; Perlglanzpigmente und optisch variable Pigmente (OVP).

Beispiele für Korrosionschutzpigmente sind Zinkchromat, Strontiumchromat, Zinkphosphat, Bleisilicochromat, Bariummetaborat und Zinkborat.

Beispiele für Füllstoffe sind Calciumcarbonat, Bariumsulfat, Talkum, Siliziumdioxid, Aluminiumsilikate, Magnesiumsilikate, Glimmer, Aluminiumhydroxyd und Kieselsäuren. Die Füllstoffe können auch mit organischen Verbindungen modifiziert (gecoatet) sein, wobei die organischen Verbindungen auch UV-härtbare Gruppen enthalten können. Beispiele für derartige modifizierte Füllstoffe sind gecoatetes mikronisiertes Aluminiumoxid oder gecoatetes mikronisiertes Silziumdioxid.

Die Pigmente können in üblicher, dem Fachmann bekannter Weise, in einem Teil der Bindemitteldispersion oder in einem speziellen Pastenharz dispergiert werden. Die Zusammensetzung der Bestandteile für eine optimale Dispergierung wird dabei für jedes Dispergieraggregat gesondert bestimmt. Als Dispergieraggregate eignen sich beispielsweise Rührscheibengeräte, Dreiwalzenstühle, Kugelmühlen oder bevorzugt Sand- oder Perlmühlen. Bei der Dispergierung können auch übliche Hilfsmittel wie beispielsweise Antischaummittel, Dispergierhilfsmittel und Mittel zur Rheologiesteuerung zugesetzt werden.

Der erfindungsgemäße anodisch abscheidbare wäßrige Elektrotauchlack kann auch übliche Lackhilfs- und Zusatzstoffe wie Biozide, Lichtschutzmittel, Verlaufsmittel enthalten. Es können auch weitere hydrophile und/oder hydrophobe Polymere mit oder ohne reaktiven Gruppen oder Mischungen dieser Polymeren mitverwendet werden.

Beispiele für solche Polymere sind gesättigte oder ungesättigte Acrylat-, Polyurethan- oder Polyesterharze, acrylmodifizierte Acrylat-, Polyurethan- oder Polyesterharze, Epoxidharze, Aminoplastharze, Phenolharze, Kohlenwaserstoffharze, silikonmodifizierte Acrylat-, Polyurethan- oder Polyesterharze, Copolymere aus Butadien und Acrylnitril, Styrol-Allyalkohol-Copolymere.

In dem erfindungsgemäßen Verfahren können alle bekannten Pulverlacke verwendet werden, wobei sie bevorzugt keine niedermolekularen sauren wasserlöslichen Bestandteile enthalten.

In Kittel "Lehrbuch der Lacke und Beschichtungen", Band VIII, Teil 2 sind im Anhang Seite 11ff Beispiele für Pulverlackzusammensetzungen beschrieben.

Die erfindungsgemäß einsetzbaren Pulverlacke enthalten eine Bindemittelkomponente bestehend aus einer filmbildenden Harzkomponente und einer Härterkomponente, wobei die Harzkomponente im allgemeinen mindestens 50 Gew.-% der zugrundeliegenden Harz-/Härter-Kombination ausmacht, während die Härterkomponente maximal 50 Gew.-% dieser Kombination beträgt.

Geeignete Harzkomponenten sind beispielsweise für die Pulverlackherstellung übliche Kunstharze wie Polyesterharze, Epoxidharze, Poly(meth)acrylatharze, Phenolharze, Polyurethanharze und Siloxanharze mit einer zahlenmittleren Mohnasse Mn von 500 bis 20000, bevorzugt von 500 bis 10000 und einer Glasübergangstemperatur zwischen +20°C und +100°C, bevorzugt zwischen +40°C und +70°C.

Die Härterkomponenten besitzen beipielsweise zahlenmittlere Molmassen Mn von 84 bis 3000, bevorzugt von 84 bis 200.

Die Harz- und Härterkomponenten tragen funktionelle Gruppen, die untereinander komplementär sind und unter den Einbrennbedingungen des Pulverlackes miteinander reagieren und dabei zur Vernetzung des Pulverlackes führen. Beispiele für solche funktionelle Gruppen sind Epoxidgruppen, Hydroxylgruppen, Carboxylgruppen, Anhydridgruppen, Isocyanatgruppen, blockierte Isocyanatgruppen, primäre oder sekundäre Aminogruppen, blockierte Aminogruppen, zur ringöffnenden Addition befähigte N-heterocyclische Gruppen wie beispielsweise Oxazolingruppen, (Meth)acryloylgruppen, CH-acide Gruppen wie beispielsweise Acetoacetatgruppen, Aminoethergruppen.

Die Auswahl der miteinander reagierenden funktionellen Gruppen ist dem Fachmann geläufig (vgl. auch H. Kittel, Lehrbuch der Lacke und Beschichtungen, Band VIII, Teil 2, Seite 12).

Gegebenenfalls können auch mehrere verschiedene funktionelle Gruppen miteinander kombiniert werden, sofern diese unter den Herstellbedingungen des Pulverlackes nicht miteinander reagieren. Das kann beispielsweise dadurch erfolgen, daß die Harzkomponente verschiedene funktionelle Gruppen trägt, oder daß Gemische von unterschiedlichen Harz- und/oder Härterkomponenten eingesetzt werden.

Die Harz- und/oder Härterkomponenten enthalten im Mittel mindestens zwei funktionelle Gruppen pro Molekül. In allgemeinen beträgt das Verhältnis von Harz-zu Härterkomponente 98 : 2 bis 50 : 50, bevorzugt liegt es zwischen 95 : 5 bis 70 : 30.

Die Bindemittelkomponente sollte bei Raumtemperatur spröde und mahlbar vorliegen. Im Temperaturbereich zwischen +100°C und +160°C sollte ein scharfer Abfall der Schmelzviskosität erfolgen, um die Substratbenetzung, den Verlauf und die Filmbildung zu begünstigen.

Insbesondere eignet sich das Verfahren für den Einsatz oder die Wiederverwertung von Pulverlacken auf Basis von epoxifunktionellen, hydroxyfunktionellen und carboxyfunktionellen Bindemittelkomponenten oder Mischungen davon.

Geeignete epoxifunktionelle Bindemittelkomponenten sind beispielsweise epoxidgruppenhaltige Polyacrylatharze, epoxidgruppenhaltige Kondensationsharze oder oligomere Polyepoxide mit beispielsweise Polycarbonsäuren, Polycarbonsäureanhydriden, sauren Polyestern, sauren Acrylatharzen, Dicyandiamid und seinen Abkömmlingen, amino- und/oder amidgruppenhaltige Verbindungen, blockierte Polyisocyanate, phenolischen Verbindungen oder Mischungen davon als Härterkomponente.

Epoxidgruppenhaltige Polyacrylatharze können nach allgemein bekannten Methoden durch radikalische Polymerisation von mindestens einem ethylenisch ungesättigten Monomeren mit mindestens einer Epoxidgruppe im Molekül und mindestens einem weiteren ethylenisch ungesättigten Monomeren ohne Epoxidgruppen im Molekül hergestellt werden.

Als ethylenisch ungesättigte Monomere mit mindestens einer Epoxidgruppe können beispielsweise Glycidylacrylat, Glycidylmethacrylat und/oder Allylglycidylether oder Mischungen dieser Monomeren eingesetzt werden.

Beispiele für ethylenisch ungesättigte Monomere, die keine Epoxidgruppen enthalten, sind Alkylester der Acryl- und Methacrylsäure mit 1 bis 20 C-Atomen in der Alkylgruppe, vinylaromatische Verbindungen, Nitrile, Vinyl- oder Vinylidenhalogenide. Es können auch geringe Mengen von mehrfach ethylenisch ungesättigten Verbindungen eingesetzt werden. Bevorzugt werden die ethylenisch ungesättigten Monomeren die keine Epoxidgruppen enthalten in Mischung eingesetzt. Epoxidgruppenhaltige Kondensationsharze können beispielsweise durch Verätherung von mehrwertigen Phenolen oder mehrwertigen aliphatischen oder cycloaliphatischen Alkoholen mit Epichlorhydrin in Anwesenheit von Alkali hergestellt werden.

Als geeignete hydroxyfunktionelle Bindemittelkomponenten können beispielsweise Polyester-, Polyether-, Polyurethan, und/oder Polyacrylatharze mit beispieslweise Carbosäureanhydriden, sauren Polyesterharzen, sauren Acrylatharzen, blockierten Polyisocyanaten, β-Hydroxyalkylamiden, substituierten Glykolurilen oder Mischungen davon als Härterkomponente eingesetzt werden.

Geeignete hydroxylfunktionelle Polyester haben beispielsweise eine OH-Zahl von 10 bis 200 mg KOH/g Harz und eine Säurezahl von kleiner 5 mg KOH/g Harz. Sie werden, nach dem Fachmann bekannten Verfahren, durch Veresterung von organischen Dicarbonsäuren und/oder deren Anhydriden mit organischen Di- und/oder Polyalkoholen hergestellt.

Geeignete hydroxylfunktionelle Polyether sind beispielsweise Polyalkcylenether mit 2 bis 100 Alkyleneinheiten pro Polymermolekül und mindestens einer freien OH-Gruppe pro Alkyleneinheit. Geeignete hydroxylfunktionelle Polyurethane werden durch Umsetzung von aliphatischen und/oder cycloaliphatischen und/oder aromatischen Diisocyanaten mit aliphatischen und/oder cycloaliphatischen und/oder araliphatischen Alkoholen mit 2 bis 6 OH-Gruppen und/oder mit den vorgenannten hydroxylfunktionellen Polyestern und/oder Polyethern erhalten werden.

Hydroxyfunktionelle Polyacrylatharze können nach allgemein bekannten Methoden durch radikalische Polymerisation von mindestens einem ethylenisch ungesättigten Monomeren mit mindestens einer Hydroxylgruppe im Molekül und mindestens einem weiteren ethylenisch ungesättigten Monomeren ohne Hydroxylgruppen im Molekül hergestellt werden.

Als ethylenisch ungesättigte Monomere mit mindestens einer Hydroxylgruppe können beispielsweise Hydroxyalkylester der (Meth)acrylsäure wie z.B. Hydroxyethyl(meth)acrylat und/oder Hydroxpropyl(meth)acrylat und/oder Hydroxybutyl(meth)acrylat oder Mischungen davon eingesetzt werden.

Beispiele für ethylenisch ungesättigte Monomere, die keine Hydroxylgruppen enthalten, sind Alkylester der Acryl- und Methacrylsäure mit 1 bis 20 C-Atomen in der Alkylgruppe, vinylaromatische Verbindungen, Nitrile, Vinyl- oder Vinylidenhalogenide. Es können auch geringe Mengen von mehrfach ethylenisch ungesättigten Verbindungen eingesetzt werden. Bevorzugt werden die ethylenisch ungesättigten Monomeren die keine Hydroxylgruppen enthalten in Mischung eingesetzt.

Geeignete carboxyfunktionelle Bindemittelkomponenten sind beispielsweise saure Polyester- oder saure Acrylatharze mit Epoxidharzen, Epoxiacrylatharzen, hydroxylgruppenhaltigen Polyester- oder Polyacrylatharzen, Oxazolinen, Triglycidylisocyanurat, β-Hydroxyalkalamiden, substituierten Glycolurilen oder Mischungen davon als Härterkomponente.

Geeignete carboxylfunktionelle Polyester haben beispielsweise eine Säurezahl von 20 bis 100 mg KOH/g Harz und eine OH-Zahl von kleiner 10 mg KOH/g Harz. Sie werden, nach dem Fachmann bekannten Verfahren, durch Veresterung von organischen Dicarbonsäuren und/oder deren Anhydriden mit organischen Di- und/oder Polyalkoholen hergestellt.

Carboxyfunktionelle Polyacrylatharze können nach allgemein bekannten Methoden durch radikalische Polymerisation von mindestens einem ethylenisch ungesättigten Monomeren mit mindestens einer Carboxylgruppe im Molekül und mindestens einem weiteren ethylenisch ungesättigten Monomeren ohne Carboxylgruppen im Molekül hergestellt werden.

Als ethylenisch ungesättigte Monomere mit mindestens einer Carboxylgruppe können beispielsweise olefinisch ungesättigte Mono- oder Dicarbonsäurem wie z.B. Acrylsäure, Methacrylsäure, Maleinsäure, Itaconsäure oder Mischungen davon eingesetzt werden.

Beispiele für ethylenisch ungesättigte Monomere die keine Hydroxylgruppen enthalten sind Alkylester der Acryl- und Methacrylsäure mit 1 bis 20 C-Atomen in der Alkylgruppe, vinylaromatische Verbindungen, Nitrile, Vinyl- oder Vinylidenhalogenide. Es können auch geringe Mengen von mehrfach ethylenisch ungesättigten Verbindungen eingesetzt werden. Bevorzugt werden die ethylenisch ungesättigten Monomeren die keine Hydroxylgruppen enthalten in Mischung eingesetzt.

Bei dem erfindungsgemäßen Verfahren können jedoch auch selbstvernetzende Pulverlacke eingesetzt werden, die als Bindemittelkomponente beispielsweise Polymere mit olefinisch ungesättigten Gruppen enthalten. Geeignete Polymere sind beispielsweise ungesättigte Polyesterharze, ungesättigte Acrylatharze, Polyurethanharze mit (Meth)acrylolylgruppen oder Mischungen von diesen Harzen, die bei der Einbrenntemperatur des anodischen Elektrotauchlackes oder durch zusätzliche energiereiche Strahlung aushärten.

Die Pulverlacke können auch Pigmente enthalten, wie sie beispielsweise bei den anodischen Elektrotauchlacken aufgeführt sind.

Weiterhin können in den Pulverlacken die für Pulverlacke üblichen Additive enthalten sein, wie beispielsweise Verlaufsmittel, Katalysatoren, Wachse, Entgasungsmittel, Antoxidantien, Lichtschutzmittel, Haftvermittler und die Schmelzrheologie steuernde Mittel.

Die Herstellung der Pulverlacke erfolgt nach dem Fachmann bekannten Verfahren, wie sie beispielsweise in "Lehrbuch der Lacke und Beschichtungen", Dr. Hans Kittel Band VIII, Teil 2, Seiten 1 bis 25 beschrieben sind.

Für den erfindungsgemäßen Einsatz kann die Teilchengröße der Pulverlacke 1 bis 100 µm betragen.

Bevorzugt handelt es sich dabei um Pulverlackreste oder Pulverlackabfälle, bei denen mindestens 40 bis 60 % eine Teilchengröße von kleiner 10 µm und bis zu 20 % eine Teilchengröße von kleiner 5 µm aufweisen.

### Beispiele:

### 1. Herstellung einer wäßrigen Bindemitteldispersion für die anodische Elektrotauchlackierung

Zu 57,00 Gewichtsteilen eines Polyesterharzes mit einer Säurezahl von 49 und einer Hydroxylzahl von 60 (hergestellt aus 26,17 Gewichtsteilen Neopentylglykol, 5,43 Gewichtsteilen Trimethylolpropan, 10,83 Gewichtsteilen Isophthalsäure, 21,45 Gewichtsteilen Isodekanol und 36,12 Gewichtsteilen Trimellitsäureanhydrid) wird in einem Reaktionsgefäß mit Rührer, Thermometer und Rückflußkühler bei 100°C eine Mischung aus 1,80 Gewichtsteilen Diethanolamin und 3 Gewichtsteilen vollentsalztem Wasser zugeggeben und 10 Minuten homogen eingerührt, anschließend werden 0,15 Gewichtsteile eines handelsüblichen Biozides ebenfalls 10 Minuten homogen eingerührt. Unter Rühren werden 38,05 Gewichtsteile vollentsalztes Wasser zugegegeben. Die Mischung wird 90 Minuten bei 80°C gerührt und anschließend zügig auf 25°C abgekühlt.

- Kennzahlen ::
- Festkörper:: 53,5 %
- (30 Minuten 180°C):
- MEQ-Wert:: 27,1 Milliequivalent Amin/100 g Festharz
- Lösemittelgehalt:: < 0,1 %

### 2. Korngrößenverteilung des Pulverlackfeinateiles:

Die Korngrößenverteilung eines Pulverlackfeinanteiles aus einem weißen Pulverlack (hergestellt aus 910 Gewichtsteilen Crylcoat 801 (Fa. UCB), 90 Gewichtsteilen Araldit PT 910 (Fa. CIBA), 540 Gewichtsteilen Titandioxid 2160 (Fa.Kronos) und 3 Gewichtsteilen Benzoin) wurde mit dem Master Sizer X der Firma Malvern ermittelt.
60 % aller Teilchen hatten eine Teilchengröße unter 10 µm, 20 % aller Teilchen eine Teilchengröße unter 5 µm.

### 3. Herstellung eines pulverlackhaltigen Elektrotauchlackbades:

Zu 280,0 Gewichtsteilen der Bindemitteldispersion aus Beispiel 1 werden 150,0 Gewichtsteile Pulverlackfeinanteil aus Beispiel 2 langsam unter Rühren zugegeben. Anschließend wird unter weiterem Rühren mit einer Mischung aus 1554,9 Gewichtsteilen vollentsalztem Wasser und 15,1 Gewichtsteilen Dimethylethanolamin verdünnt.

- Kennzahlen::
- Festkörper:: 15 %
- MEQ-Wert:: 70 Milliequivalent Amin/100 g Festharz
- Pulver: Bindemittel:: 1 : 1
- Pigment: Bindemittel:: 0,2 : 1

### 4. Vergleichsversuch:

Zu 467,3 Gewichtsteilen der Bindemitteldispersion aus Beispiel 1 werden 50,0 Gewichtsteile Titandioxid 2160 (Fa. Kronos) unter dem Dissolver eingearbeitet. Anschließend wird unter weiterem langsamen Rühren mit einer Mischung aus 1470,1 Gewichtsteilen vollentsalztem Wasser und 12,6 Gewichtsteilen Dimethylethanolamin verdünnt.

- Kennzahlen::
- Festkörper:: 15 %
- MEQ-Wert:: 70 Milliequivalent Amin pro 100 g Festkörper
- Pigment: Bindemittel:: 0,2 : 1

### 5. Prüfung des Umgriffs:

In den Elektrotauchlackbädern nach den Beispielen 3. und 4. wurden Umgriffsbestimmungen gemäß "Ford Laboratory Test Method BI 120-02" bei einer Gesamteintauchtiefe von 24 cm durchgeführt:

| | Beispiel 3 | Beispiel 4 (Vergleich) |
|---|---|---|
| Badtemperatur | 30°C | 30°C |
| Beschichtungsspannung | 250 Volt | 250 Volt |
| Beschichtungszeit | 2 Minuten | 2 Minuten |
| Schichtdicke außen | 18 µm | 21 µm |
| Schichtdicke innen | 20 ± 1 µm | 23 ± 1 µm |
| 7 µm Grenze | 15 cm | 11 cm |
| 1 µm Grenze | 18 cm | 13 cm |
| Reichweite innen gesamt | 85,7 % | 59 % |

## Patentansprüche

1. Verwendung von Pulverlacken und/oder Pulverlackabfällen mit einer Teilchengrößenverteilung von 0,5 bis 100 µm, wobei 40 bis 60 Gew.-% eine Teilchengröße unter 10 µm und bis zu 20 Gew.-% eine Teilchengröße unter 5 µm aufweisen, als Zusatzstoffe zu anodisch abscheidbaren Elektrotauchlacken.

2. Anodisch abscheidbarer Elektrotauchlack, enthaltend ein oder mehrere Bindemittel, Wasser sowie gegebenenfalls ein oder mehrere Vernetzungsmittel, Pigmente, Füllstoffe und/oder übliche Additive, dadurch gekennzeichnet, daß er einen oder mehrere Pulverlacke und/oder Pulverlackabfälle mit einer Teilchengrößenverteilung von 0,5 bis 100 µm, wobei 40 bis 60 Gew.-% eine Teilchengröße unter 10 µm und bis zu 20 Gew.-% eine Teilchengröße unter 5 µm aufweisen, enthält.

3. Anodisch abscbeidbarer Elektrotauchlack nach Anspruch 2, dadurch gekennzeichnet, daß er 50 bis unter 200 Gewichtsteile Pulverlack und/oder Pulverlackabfälle bezogen auf 100 Gewichtsteile Bindemittel plus gegebenenfalls vorhandenem Vernetzungsmittel, enthält.

4. Anodisch abscheidbarer Elektrotauchlack gemäß Anspruch 2 oder 3, dadurch gekennzeichnet, daß er enthält:
A) 67 bis 33 Gew.-% einer wasserverdünnbaren Komponente aus einem oder mehreren Bindemitteln und gegebenenfalls einem oder mehreren Vernetzungsmitteln und gegebenenfalls einem oder mehreren Pigmenten und/oder Füllstoffen,
B) 33 bis 67 Gew.-% eines oder mehrerer Pulverlacke und/oder Pulverlackabfälle mit einer Teilchengrößenverteilung von 0,5 bis 100 µm, wobei 40 bis 60 Gew.-% eine Teilchengröße unter 10 µm und bis zu 20 Gew.-% eine Teilchengröße unter 5 µm aufweisen,
sowie Wasser und gegebenenfalls ein oder mehrere übliche Additive, wobei das Gewichtsverhältnis von Bindemittel zu Vernetzungsmittel in der Komponente A) 100 : 0 bis 65 : 35 und das Pigment/Bindemittel-Gewichtsverhältnis in der Komponente A) 0,1: 1 bis 1,5 : 1 beträgt.

5. Verfahren zur Herstellung eines anodisch abscheidbaren Elektrotauchlacks durch Vermischen einer wäßrigen Dispersion eines Bindemittels mit einem oder mehreren Pulverlacken und/oder Pulverlackabfällen mit einer Teilchengrößenverteilung von 0,5 bis 100 µm, wobei 40 bis 60 Gew.-% eine Teilchengröße unter 10 µm und bis zu 20 Gew.-% eine Teilchengröße unter 5 µm aufweisen, sowie gegebenenfalls mit einem oder mehreren Vernetzungsmitteln, Pigmenten, Füllstoffen und/oder üblichen Additiven.

6. Verfahren zur Verbesserung des Umgriffs bei der anodischen Elektrotauchlackierung, dadurch gekennzeichnet, daß man ein anodisch abscheidbares Elektrotauchbad verwendet, dem man ein oder mehrere Pulverlacke und/oder Pulverlackabfälle zusetzt.

7. Verfahren zur anodischen Elektrotauchlackierung, dadurch gekennzeichnet, daß man einen anodisch abscheidbaren Elektrotauchlack gemäß einem der Ansprüche 2 bis 4 verwendet.

8. Substrat, beschichtet nach dem Verfahren von Anspruch 7.
